# EUROPEAN PATENT APPLICATION

(11) **EP 4 838 433 A1**
(43) Date of publication of application: **11.11.2026**
(21) Application number: 25174973.5
(22) Date of filing: 08.05.2025
(51) Int. Cl.: G06Q 10/06, G05B 23/02

(54) **METHOD AND SYSTEM FOR DYNAMIC REAL-TIME WEIGHTED ALARM PROPERTY GRAPH MANAGEMENT**

(71) Applicant: Siemens Aktiengesellschaft, 80333 München (DE)
(72) Inventor: Bansal, Vishal, 562157 Bangalore (IN); Innamuri, Rajasekhar Babu, 533002 Kakinada, Andhra Pradesh (IN); Negi, Chandra Mohan Singh, 560076 Bangalore, Karnataka (IN); Roy, Santu, 712410 West Bengal (IN); Singh, Vivek, 562125 Bangalore, Karnataka (IN)
(74) Representative: Isarpatent

(57) **Abstract**

A computer-implemented method and system for dynamic real-time weighted alarm property graph management is disclosed. The method includes receiving a plurality of live alarm and event data streams from at least one system source (108A-N) via an input interface (302). Relations among alarms, events, and entity representations are detected from the received streams. A property graph structure is generated, comprising a plurality of nodes and edges, with each edge assigned a weight based on characteristics of the detected relations. The method further comprises modifying the weight of at least one edge in the property graph structure within a sliding temporal window in response to changes in the received streams or operator feedback. Based on the modified property graph structure, at least one prioritized output or visualization is generated and delivered to an operator interface (122A-N), thereby enhancing operator situational awareness.

## Description

The present disclosure relates generally to computer-implemented systems and methods for real-time alarm management and event analysis. More specifically, it pertains to the generation and dynamic modification of weighted property graph structures representing relationships among alarms, events, and entities-enabling enhanced situational awareness, operator guidance, anomaly detection, and analytics in complex monitoring environments.

In modern complex monitoring environments, such as industrial automation systems, data centers, healthcare monitoring platforms, and critical infrastructure control rooms, operators are often required to manage, interpret, and respond to a high volume of alarms and event notifications generated in real time by various subsystems and sensors. The increasing scale and interconnectivity of such environments have led to a surge in alarm frequency and complexity, resulting in alarm floods and information overload for human operators.

A significant challenge arises in distinguishing high-priority alarms from routine or less critical notifications, particularly when relationships and dependencies exist among diverse alarms, events, and system entities. Operators may lack effective tools to visualize, correlate, and prioritize these interrelated items, often leading to missed critical alarms, delayed responses, or failure to recognize escalating incidents.

Furthermore, supporting documentation and operational knowledge are typically stored in disparate formats and locations, making quick access to relevant information during time-sensitive situations difficult. Operators also have limited means to feed back their experience into the monitoring process, inhibiting system learning and adaptation.

Traditional alarm management systems often lack mechanisms to represent complex relationships with adjustable significance, to incorporate evolving knowledge from operator input, or to detect patterns over time that signify emerging risks or recurrent issues. This hinders the ability to provide actionable recommendations, streamlined collaboration, and proactive anomaly detection.

The absence of robust frameworks for integrating live data streams, contextual documentation, operator feedback, and historical patterns impedes the effective analysis and prioritization of alarms and events. As a result, situational awareness is diminished and overall system safety, efficiency, and operator effectiveness are compromised. Thus, it is an object of the present disclosure to provide a method and system for dynamic real-time weighted alarm property graph management.

The object of the present disclosure is achieved by a computer-implemented method for dynamic real-time weighted alarm property graph management.

The method comprises receiving a plurality of live alarm and event data streams from at least one system source via an input interface. The method further comprises detecting a plurality of documentation sources. The method further comprises partitioning each documentation source into a plurality of content segments. The method further comprises generating a header for each content segment for inclusion as nodes in the property graph structure.

The method further comprises detecting a plurality of relations among the plurality of alarms, the plurality of events, and the plurality of entity representations from the plurality of received streams. The method further comprises generating a property graph structure comprising the plurality of nodes and the plurality of edges, each edge having a weight determined by at least one characteristic of the detected relation. The method further comprises generating an adjacency matrix comprising weights of the edges in the property graph structure.

The method further comprises synchronizing the plurality of historical patterns with the property graph structure. The method further comprises modifying prioritization or weighting based on detection of at least one recurring pattern. The method further comprises receiving at least one feedback instance from a user feedback interface. The method further comprises modifying the weight of at least one edge in the property graph structure in response to the received feedback. The method further comprises modifying the weight of at least one edge in the property graph structure within a sliding temporal window based on changes in the plurality of received streams or operator feedback.

The method further comprises receiving an alert or event. The method further comprises allocating a dedicated chat thread associated with the alert or event. The method further comprises generating a context-specific response comprising guidance using at least a subset of nodes in the property graph structure. The method further comprises detecting an abnormal pattern in the property graph structure. The method further comprises applying a language model to generate at least one action recommendation.

The method further comprises displaying the at least one action recommendation to the operator interface. The method further comprises transmitting the adjacency matrix to at least one downstream module for analytics. The method further comprises generating at least one prioritized output or visualization based on the modified property graph structure to an operator interface, thereby providing a technical effect in operator situational awareness.

The object of the present disclosure is further achieved by a system for dynamic real-time weighted alarm property graph management. The system comprises an input interface configured to receive a plurality of live alarm and event data streams from at least one system source. The system further comprises a documentation ingestion unit configured to detect the plurality of documentation sources. The documentation ingestion unit is further configured to partition each documentation source into the plurality of content segments. The documentation ingestion unit is further configured to generate a header for each content segment for inclusion as nodes in the property graph structure. The system further comprises a processor configured to detect the plurality of relations among the plurality of alarms, the plurality of events, and the plurality of entity representations from the plurality of received streams.

The system further comprises an encoding mechanism configured to generate a property graph structure comprising the plurality of nodes and the plurality of edges, each edge having a weight determined by at least one characteristic of the detected relation. The system further comprises a matrix generator configured to generate an adjacency matrix comprising weights of the edges in the property graph structure. The matrix generator is further configured to transmit the adjacency matrix to at least one downstream module for analytics. The system further comprises a historical data storage configured to synchronize the plurality of historical patterns with the property graph structure. The historical data storage is further configured to cause modification of prioritization or weighting based on detection of at least one recurring pattern.

The system further comprises a user feedback interface configured to receive at least one feedback instance. The user feedback interface is further configured to cause modification of at least one edge in the property graph structure in response to the received feedback. The system further comprises the processor further configured to modify the weight of at least one edge in the property graph structure within a sliding temporal window based on changes in the plurality of received streams or operator feedback. The system further comprises a pipeline module configured to receive an alert or event. The pipeline module is further configured to allocate a dedicated chat thread associated with the alert or event.

The pipeline module is further configured to generate a context-specific response comprising guidance using at least a subset of nodes in the property graph structure. The system further comprises a language model engine configured to detect an abnormal pattern in the property graph structure. The language model engine is further configured to generate at least one action recommendation. The language model engine is further configured to output the at least one action recommendation to the operator interface.

The system further comprises an output module configured to generate at least one prioritized output or visualization based on the modified property graph structure to an operator interface, thereby providing a technical effect in operator situational awareness.

The present disclosure is further described hereinafter with reference to illustrated embodiments shown in the accompanying drawings, in which:
- FIG 1: is a block diagram of an industrial environment capable of dynamic real-time weighted alarm property graph management, according to an embodiment of the present disclosure;
- FIG 2: is a block diagram of a system, such as those shown in FIG. 1, in which an embodiment of the present disclosure can be implemented;
- FIG 3: is a block diagram of an automation module, such as those shown in FIG 2, in which an embodiment of the present disclosure can be implemented;
- FIG 4: is a process flowchart illustrating an exemplary method of dynamic real-time weighted alarm property graph management, according to an embodiment of the present disclosure;
- FIG. 5: is a schematic diagram of an exemplary transformed property graph structure generated by the dynamic real-time weighted alarm property graph management system described in the present disclosure; and
- FIG. 6: is a high-level architecture and workflow of an end-to-end alarm rationalization and situational awareness system integrating retrieval-augmented generation (RAG) and property graph methodologies, in accordance with the present disclosure.

Various embodiments are described with reference to the drawings, wherein like reference numerals are used to re-fer the drawings, wherein like reference numerals are used to refer to like elements throughout. In the following de-scription, for the purpose of explanation, numerous specific details are set forth in order to provide thorough understanding of one or more embodiments. It may be evident that such embodiments may be practiced without these specific details.

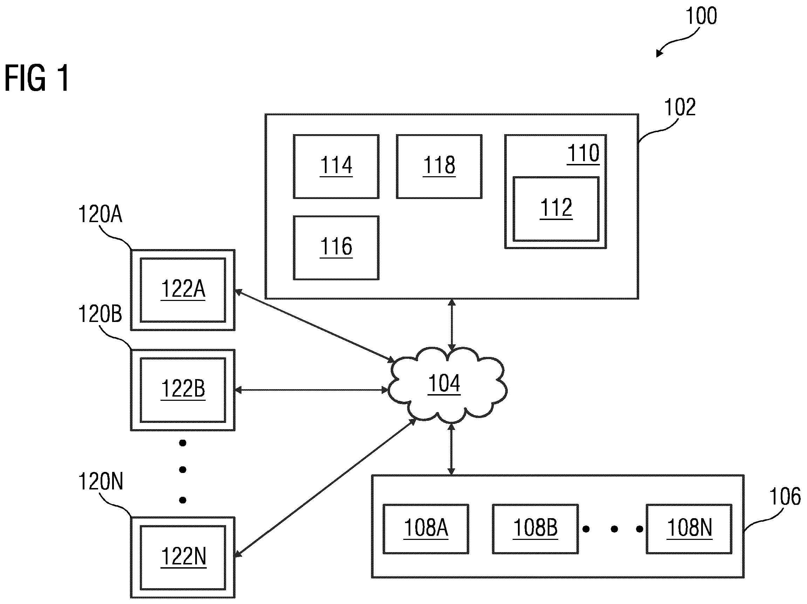

FIG 1 is a block diagram of an industrial environment 100 capable of dynamic real-time weighted alarm property graph management in an industrial control system 106, according to an embodiment of the present disclosure.

In FIG 1, the industrial environment 100 includes a system 102 and one or more client devices 120A-N. As used herein, an industrial environment refers to a processing environment comprising configurable computing physical and logical resources, for example, networks, servers, storage, applications, services, etc., and data distributed over a platform, such as a cloud computing platform. The industrial environment 100 provides on-demand network access to a shared pool of the configurable computing physical and logical resources. The system 102 is communicatively connected to an industrial plant via the network 104 (such as a Local Area Network (LAN), a Wide Area Network (WAN), Wi-Fi, the Internet, or any short range or wide range communication). The system 102 is also connected to the one or more client devices 120A-N via the network 104. The system 102 receives a plurality of information items from the industrial control system 106. The industrial control system 106 comprises a plurality of sources 108A-N, which generate alarm signals.

The industrial environment 100 may include a variety of configurable computing physical and logical resources, such as networks, servers, storage systems, applications, services, and data distributed over platforms like cloud computing environments. Each industrial environment 100 is designed to provide on-demand network access to a shared pool of these configurable resources, enabling scalable and flexible operations. For example, the industrial environment 100 can host applications that monitor industrial processes, store large volumes of operational data, and provide computational resources for real-time alarm analysis. In the context of the present disclosure, the industrial environment 100 ensures that all necessary resources are available to support the real-time processing and prioritization of alarms, thereby enhancing operational efficiency and responsiveness.

The system 102 may be a centralized computing unit, such as a server or a set of interconnected servers, equipped with specialized software for managing and analyzing alarm data. Each system 102 is responsible for receiving, processing, and prioritizing alarms generated within the industrial control system 106. For example, the system 102 can aggregate alarm signals from multiple sources, construct property graphs to represent alarm relationships, and dynamically adjust prioritization based on real-time data. In the present disclosure, the system 102 serves as the core processing unit that enables the real-time analysis and prioritization of alarms, ensuring that crucial notifications are promptly identified and addressed.

The system 102 can be deployed as either a standalone server located at a control station or a remote server hosted on a cloud computing platform, with a preferred embodiment being a cloud-based control system. The system 102 delivers applications, including cloud-based tools, to enable seamless monitoring, control, and automation of industrial plants.

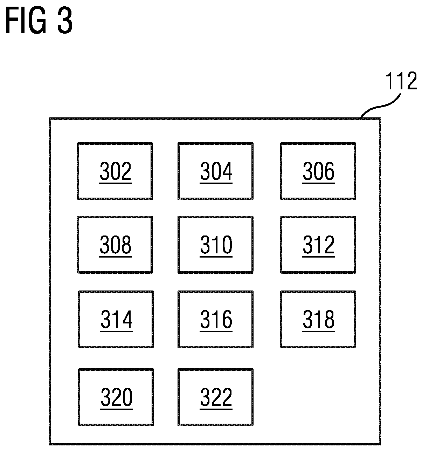

The system 102 comprises a platform 110 and a server 114. The platform 110, which serves as a cloud computing platform, combines dedicated hardware and software built on top of the operating system (OS) of the server 114. The platform 110 enables essential functionalities such as data reception, data processing, data rendering, and data communication. The platform 110 also incorporates application programming interfaces (APIs) to facilitate service delivery. Additionally, the platform 110 includes an automation module 112. The automation module 112 plays a pivotal role within the system 102 by enabling the creation, execution, and management of engineering projects. The automation module 112 leverages a knowledge repository to ensure a structured and comprehensive representation of project-related information. The detailed functionality of the automation module 112 is explained in FIG. 3.

The server 114 provides a computational backbone for the system 102, comprising processors capable of executing machine-readable instructions and storage devices, such as memory units, for storing data, applications, APIs, and other resources essential for cloud computing. The server 114 also includes peripherals necessary to support seamless and efficient operation.

A network interface 116 enables communication between the system 102, the industrial plant, and the client devices 120A-N. The network interface 116 facilitates real-time data exchange, allowing engineers to access engineering projects stored within the system 102 and perform actions on these projects simultaneously. A cloud interface (not shown in FIG. 1) further enhances collaboration and accessibility for users.

A database 118 acts as a central storage repository for the system 102, maintaining critical information related to the industrial plant and the client devices 120A-N. The database 118 can be implemented as a structured query language (SQL) data store or a not-only-SQL (NoSQL) data store. In a cloud-based embodiment, the database 118 is hosted within the industrial environment 100, delivering computing resources as a service through the platform 110. Alternatively, the database 118 may be directly accessible by the automation module 112. The database 118 is configured to store a wide range of data, including engineering project files, engineering programs, object behavior models, parameter values of engineering objects, test results, simulation results, simulation instances, graphical programs, program logics, program logic patterns, product manuals, engineering object properties, relationship information between engineering objects, program updates, requirements, and status messages.

The one or more client devices 120A-N may be desktop computers, laptop computers, tablets, smartphones, and the like. Each of the one or more client devices 120A-N is provided with a user interface tool 122A-N for viewing alarms. The one or more client devices 120A-N can access cloud applications, such as providing performance visualization of a plurality of alarms via a browser. Throughout the specification, the terms "client device" and "user device" are used interchangeably. Additionally, in the context of the present disclosure, the client devices 120A-N enable operators and engineers to interact with the real-time alarm prioritization system, access visualizations, and manage troubleshooting tasks effectively.

The network 104 may include various communication infrastructures such as Local Area Networks (LAN), Wide Area Networks (WAN), Wi-Fi, the Internet, and other short-range or wide-range communication technologies. Each network 104 facilitates the communicative connection between the system 102 and the industrial plant, as well as between the system 102 and the client devices 120A-N. For example, the network 104 can utilize Ethernet for wired connections, Wi-Fi for wireless access, and VPNs for secure remote communications. In the present disclosure, the network 104 ensures seamless and reliable data transmission between all components, enabling real-time data flow and integration necessary for effective alarm analysis and prioritization.

The industrial control system 106 may consist of various control mechanisms such as Programmable Logic Controllers (PLCs), Distributed Control Systems (DCS), Supervisory Control and Data Acquisition (SCADA) systems, and other automation devices. Each industrial control system 106 is responsible for monitoring and controlling industrial processes, generating alarm signals in response to anomalous or noteworthy events. For example, the industrial control system 106 can manage the operation of machinery in a manufacturing plant, monitor environmental conditions in a chemical refinery, and trigger alarms in case of equipment failures or safety breaches. In the present disclosure, the industrial control system 106 provides the essential data inputs in the form of alarms that are analyzed and prioritized by the system 102 to optimize operator response and operational management.

The plurality of sources 108A-N may include various sensors, actuators, controllers, and other devices that generate alarm signals indicative of different industrial control system 106 events. Each source 108A-N is configured to detect specific conditions or anomalies within the industrial plant and produce corresponding alarm notifications. For example, a source 108A might be a temperature sensor that triggers an alarm when operating temperatures exceed safe thresholds, while another source 108B could be a vibration sensor indicating potential machinery malfunction. In the context of the present disclosure, the plurality of sources 108A-N provide the raw alarm data that is ingested by the system 102 for real-time analysis, property graph generation, and prioritization, thereby enabling comprehensive monitoring and prompt response to critical events.

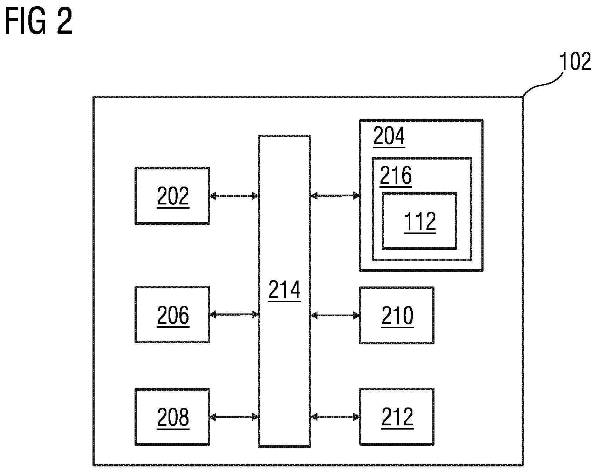

FIG 2 is a block diagram of the system 102, such as those shown in FIG 1, in which an embodiment of the present disclosure can be implemented. In FIG 2, the system 102 includes a processor 202, an accessible memory 204, a storage unit 206, a communication interface 208, an input-output unit 210, a network interface 212, and a bus 214.

The processor 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor 202 may also include embedded controllers, such as generic or programmable logic devices or arrays, application-specific integrated circuits, single-chip computers, and the like. The memory 204 may be a non-transitory volatile memory and a non-volatile memory. The memory 204 may be coupled for communication with the processor 202, such as being a computer-readable storage medium. The processor 202 may execute machine-readable instructions and/or source code stored in the memory 204. A variety of machine-readable instructions may be stored in and accessed from the memory 204. The memory 204 may include any suitable elements for storing data and machine-readable instructions, such as read-only memory, random access memory, erasable programmable read-only memory, electrically erasable programmable read-only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the automation module 112 stored in the form of machine-readable instructions on any of the above-mentioned storage media and may be in communication with and executed by the processor(s) 202.

The computer-readable code within the automation module 112 is meticulously crafted to perform a series of complex tasks, including the analysis of technical commissioning documents, identification of engineering objects, determination of metadata tags, and selection and application of appropriate Low-code models on the metadata tags. An industrial plant, on the other hand, is a large-scale facility where industrial processes are carried out to manufacture goods or process raw materials. The industrial plant has a plurality of implementations which vary widely in function and complexity, ranging from power plants, which generate electricity, to refineries, which process crude oil into usable products like gasoline and diesel, to manufacturing plants that produce consumer goods. Each type of industrial plant has a unique set of requirements and challenges, necessitating a tailored engineering project to address its specific needs. For instance, a power plant might require detailed engineering for turbines, boilers, generators, and cooling systems, while a food processing plant would focus on sanitary design, refrigeration systems, and automated packaging lines.

The storage unit 206 may be a non-transitory storage medium configured for storing a database (such as the database 118) which comprises a server version of the plurality of programming blocks associated with a set of industrial domains.

The communication interface 208 is configured for establishing communication sessions between the one or more client devices 120A-N and the system 102. The communication interface 208 allows one or more engineering applications running on the client devices 120A-N to import/export one or more engineering projects into the system 102.

The input-output unit 210 may include input devices such as a keypad, a touch-sensitive display, or a camera (such as a camera receiving gesture-based inputs), capable of receiving one or more input signals, such as user commands to process the generated engineering project. Also, the input-output unit 210 may be a display unit for displaying a graphical user interface which visualizes data to the user. The bus 214 acts as an interconnect between the processor 202, the memory 204, and the input-output unit 210.

The network interface 212 is configured to handle network connectivity, bandwidth, and network traffic between the system 102, the client devices 120A-N, and the industrial plant 106.

Those of ordinary skill in the art will appreciate that the hardware depicted in FIG 2 may vary for particular implementations. For example, other peripheral devices such as an optical disk drive and the like, a Local Area Network (LAN), a Wide Area Network (WAN), a Wireless (e.g., Wi-Fi) adapter, a graphics adapter, a disk controller, or an input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of the industrial control system 106 as is unique to the present disclosure or necessary for an understanding of the present disclosure is depicted and described. The remainder of the construction and operation of the system 102 may conform to any of the various current implementations and practices known in the art.

Fig. 3 is a block diagram of the automation module 112, as illustrated in fig. 2, in which an embodiment of the present disclosure can be implemented. In fig. 3, the automation module 112 comprises an input interface 302, an encoding mechanism 304, a first pipeline module (contextual processing) 306, a historical data storage 308, a matrix generator 310, a documentation ingestion unit 312, a language model engine 314, a second pipeline module (external system data handling) 316, a third pipeline module (RAG and chat thread management) 318, an output module 320, and a synchronization module 322. Fig. 3 is explained in conjunction with fig. 1 and fig. 2.

The input interface 302 is configured to receive live alarm and event data streams associated with the industrial control system 106. The input interface 302 aggregates alarms, operational metrics, and contextual events from various subsystems and sensors. It preprocesses data for downstream modules, ensuring the data is in an appropriate format, and supports both synchronous and asynchronous data streams to accommodate diverse monitoring environments.

The encoding mechanism 304 is configured to generate a property graph structure representing relationships among alarms, events, and system entities. The encoding mechanism 304 creates nodes and assigns edges with weights reflecting the strength or nature of the detected relations. It updates the property graph structure dynamically as incoming data changes, integrating newly identified nodes and relations seamlessly to support ongoing analysis.

The first pipeline module (contextual processing) 306 is configured to process contextual information extracted from the property graph and integrate additional data sources as needed. The first pipeline module (contextual processing) 306 correlates alarms with real-time performance metrics, control settings, and relevant environmental data. It enhances situational awareness for operators by providing enriched system states and adapts context integration strategies based on the operational scenario.

The historical data storage 308 is configured to store and manage time-series records of past alarms, events, and operator responses. The historical data storage 308 provides rapid retrieval of historical alarm sequences and resolutions during active incidents, supports long-term trend analysis and recurring pattern detection within the property graph, and synchronizes its archives with live property graph updates for continual learning.

The matrix generator 310 is configured to compute and maintain an adjacency or affinity matrix that represents weighted relationships in the property graph. The matrix generator 310 updates matrix values in real time based on historical, operational, or feedback-driven changes, exports these matrices to downstream analytic modules for further processing, and supports visualization modules by providing current edge-weight information reflecting system states.

The documentation ingestion unit 312 is configured to partition technical documentation into manageable content segments, each with descriptive headers. The documentation ingestion unit 312 extracts key sections and adds them as nodes in the property graph, linking documentation directly to relevant operational entities. It updates its indexed documents as new manuals or knowledge become available and enhances troubleshooting efficiency by enabling targeted retrieval of critical information.

The language model engine 314 is configured to apply advanced natural language processing techniques to extract intents, entities, and actionable insights from technical documents and property graphs. The language model engine 314 interprets operator queries and system messages to generate relevant recommendations and guidance, continuously refines its understanding based on new data and feedback, and generates contextually tailored explanations to improve operator comprehension during incidents.

The second pipeline module (external system data handling) 316 is configured to facilitate seamless communication between the automation module 112 and external systems or data sources. The second pipeline module (external system data handling) 316 receives, synchronizes, and preprocesses real-time alarm and event data from remote facilities, partner plants, or auxiliary systems. It ensures data compatibility across diverse protocols and standards, and integrates external information into the property graph for enriched overall system analysis.

The third pipeline module (rag and chat thread management) 318 is configured to allocate and maintain dedicated chat threads linked to specific alerts or events. The third pipeline module (rag and chat thread management) 318 interfaces with the property graph and documentation segments, enabling dynamic retrieval of relevant knowledge for context-specific operator interactions. It communicates with the language model engine 314 to generate real-time troubleshooting steps and recommendations, and logs all interaction threads for future reference and continuous improvement of guidance quality.

The output module 320 is configured to deliver processed recommendations, system alerts, report summaries, or guidance to operators or external recipient systems. The output module 320 ensures that the actionable insights generated by the automation module 112 are presented in a clear, concise format suitable for operator review or automatic actions within the control environment. It manages formatting, prioritization, and distribution of outgoing information.

The synchronization module 322 is configured to coordinate data updates, ensure consistency between live and stored information, and manage interactions among the various modules within the automation module 112. The synchronization module 322 provides timing and state management mechanisms so that modules such as the input interface 302, historical data storage 308, and the matrix generator 310 operate coherently, reducing data redundancy and preventing conflicts during real-time operations and updates.

The automation module 112 is a dedicated software component or package that contains a program necessary to execute each step of the method. The software for the program is written using programming languages suitable for industrial automation, such as C++, Python, or Java, or specialized languages used in the industrial control system 106, such as Structured Text (ST) or Function Block Diagram (FBD) under IEC 61131-3 standards. The software for the program includes modules for data input processing, scaling algorithms, pattern recognition algorithms, graphical rendering algorithms, and user interaction handling, ensuring that each functional aspect of the method is implemented programmatically within the automation module 112.

The software for the program is stored in the memory 204 associated with the automation module 112, such as a non-volatile memory in an industrial controller or a dedicated computing system. The automation module 112 is integrated into the broader architecture of the industrial control system 106, enabling the software for the program to interact with data sources, such as the sources 108A-N, and the knowledge base containing predefined object definitions.

The processor 202 is a central processing unit (CPU) or a microcontroller capable of performing high-speed computations and executing multiple program instructions concurrently. The processor 202 is configured to read the software for the program from the memory 204 associated with the automation module 112 and interpret the instructions line by line or block by block.

The automation module 112 is configured to cause the processor 202 to receive a plurality of live alarm and event data streams from at least one system source 108A-N via the Input Interface 302. Each plurality of live alarm and event data streams is a continuous sequence of time-stamped digital messages, each digital message encapsulating at least an alarm identifier, an event code, a severity score expressed as an integer ranging from 0 to 100, and a millisecond-resolution time marker measured in Coordinated Universal Time. The plurality of live alarm and event data streams is received by application of a data-ingestion algorithm such as at least one of a message-queue consumer algorithm, a publish-subscribe broker algorithm, or a streaming pull algorithm on Transmission Control Protocol packets that contain the digital messages. The algorithm is configured to acknowledge packet receipt, verify the digital signature enclosed in the packet header, and store the payload inside a ring buffer sized to hold sixty seconds of traffic. In one embodiment, the Input Interface 302 applies the publish-subscribe broker algorithm to receive the plurality of live alarm and event data streams.

A real-world example of a live alarm and event data stream is a series of Modbus-Transmission Control Protocol packets emitted by a programmable logic controller installed on a bottling line. A system source 108A-N refers to a hardware or software entity that originates the plurality of live alarm and event data streams. Examples of the system source 108A-N include a programmable logic controller, the distributed control system 106, and a supervisory control and data acquisition server that operate inside the industrial plant. The Input Interface 302 is a communication gateway configured to ingest the plurality of live alarm and event data streams over network protocols such as Message Queuing Telemetry Transport, Open Platform Communications Unified Architecture, or WebSockets. In one example, the Input Interface 302 receives the plurality of live alarm and event data streams from a Siemens WinCC Unified server located on an isolated industrial Ethernet segment.

The automation module 112 is configured to cause the processor 202 to detect a plurality of documentation sources by scanning a predefined repository list and monitoring network shared folders for newly created or updated files. Each plurality of documentation sources is a collection of digital repositories that store operational manuals, schematics, or maintenance records relevant to industrial equipment. The plurality of documentation sources is detected by application of an algorithm such as at least one of a directory-polling algorithm, a file-metadata-change notification algorithm, or a content-based hashing algorithm on repository-path descriptors. The algorithm is configured to examine file-system events, compare Secure Hash Algorithm-256 content hashes, and register a documentation source when a threshold count of relevant keywords that represent plant equipment exceeds five. In one embodiment, the processor 202 applies the file-metadata-change notification algorithm to detect the plurality of documentation sources. A real-world example of a documentation source is an online Portable Document Format folder containing pump-maintenance manuals stored on a corporate Share Point site.

The automation module 112 is configured to cause the processor 202 to partition each documentation source into a plurality of content segments, with each content segment being a logically coherent excerpt of the documentation containing between 150 and 300 Unicode characters, thereby preserving semantic continuity while enabling efficient downstream processing. Partitioning of each documentation source is accomplished by applying natural-language-processing techniques that respect structural delimiters such as headings, paragraphs, or page numbers. The plurality of content segments is generated by application of an algorithm such as at least one of a sliding-window text-chunking algorithm, a hierarchical semantic-segmentation algorithm, or a rule-based page-break algorithm on raw document text. The algorithm is configured to identify break points where a segment separator can be introduced without splitting technical instructions mid-sentence. In one embodiment, the processor 202 applies the hierarchical semantic-segmentation algorithm to partition each documentation source. A practical illustration is splitting a 120-page valve manual into 480 content segments, each content segment corresponding to a single maintenance step or safety warning.

The automation module 112 is further configured to cause the processor 202 to generate a header for each content segment for inclusion as nodes in the property graph structure 312. A header is a metadata string comprising at least a segment identifier, a document-title substring, and a primary keyword extracted from a first sentence of the content segment. A real-world example of a header is "ValveManual-Sec12-BleedProcedure." Header generation is performed by first normalizing text inside the content segment, then extracting a noun phrase having a highest Term Frequency-Inverse Document Frequency (TF-IDF) score, and finally concatenating that noun phrase with a document identifier and a segment index. This procedure ensures that every node inserted into the property graph structure carries a concise, human-readable label that facilitates retrieval and visualization.

The automation module 112 is configured to cause the processor 202 to detect a plurality of relations among a plurality of alarms, a plurality of events, and a plurality of entity representations derived from the plurality of received streams. The plurality of relations includes at least causal dependencies, temporal co-occurrence within a sliding window of thirty seconds, and equipment-hierarchy associations. The plurality of relations is detected by application of an algorithm such as at least one of a pointwise-mutual-information algorithm, a dynamic-time-warping algorithm, or a Bayesian causal-inference algorithm on time-aligned alarm and event sequences. The algorithm is configured to examine timestamp correlations, evaluate conditional probabilities, and label a relation as significant when a computed relation score exceeds a configurable threshold of 0.6. In one embodiment, the processor 202 applies the Bayesian causal-inference algorithm to detect relations among the plurality of alarms and the plurality of events. A real-world relation example is an observation that alarm "Motor_Overheat" precedes event "Emergency_Stop" with a conditional-probability value of 0.78, indicating potential causal linkage.

An entity representation is a node abstraction that encapsulates an equipment object, a documentation header, or a process variable; for instance, an entity representation corresponds to a centrifugal-pump symbol identified in a piping-and-instrumentation-diagram file. The Encoding Mechanism 304 is configured to generate a property graph structure comprising the plurality of nodes and the plurality of edges, each edge having a numeric weight determined by at least one characteristic of a detected relation. The numeric weight is expressed as a floating-point value ranging from 0.0 to 1.0, where higher values indicate stronger relational significance derived from metrics such as frequency of co-occurrence or calculated causal confidence. For example, an edge that links node "ValveFailure" to node "PressureDrop" carries a weight of 0.87 if those events repeatedly co-occur within a five-second window across historical logs. The property graph structure is stored in a graph database such as Neo4j, thereby allowing millisecond-level query latency for downstream analytics.

The Matrix Generator 310 is configured to generate an adjacency matrix comprising weights of the edges in the property graph structure 304. The adjacency matrix is a two-dimensional array having dimensions N × N expressed in Institute of Electrical and Electronics Engineers-754 thirty-two-bit floating-point format, where N denotes the number of nodes currently present in the property graph structure 304. Each cell at position (i, j) stores a weight of an edge directed from node i to node j, whereas a value of 0.0 denotes absence of a direct edge. For a graph with ten thousand nodes, the adjacency matrix therefore contains one hundred million cells that are stored in a compressed-sparse-row representation to conserve memory.

The automation module 112 is configured to cause the processor 202 to synchronize a plurality of historical patterns with the property graph structure 304. Synchronization of the plurality of historical patterns is performed in two stages: a scheduled batch job retrieves historical patterns from the Historical Data Storage 308 and converts the historical patterns into node and edge deltas, after which a merge routine updates the property graph structure by adding missing nodes, adjusting edge weights, and tagging legacy patterns with a "historical" label. The plurality of historical patterns is synchronized by application of an algorithm such as at least one of a graph-merge algorithm, a temporal-alignment algorithm, or a differential-update algorithm on versioned graph snapshots. The algorithm is configured to ensure idempotent updates and to prevent duplication of nodes that share identical unique identifiers. In one embodiment, the processor 202 applies the differential-update algorithm to synchronize the plurality of historical patterns.

The automation module 112 is further configured to cause the processor 202 to modify prioritization or weighting based on detection of at least one recurring pattern. Modification of prioritization or weighting occurs after a pattern-detection routine flags a repeated sequence of alarms that has occurred more than three times within a preceding twenty-four-hour period. The prioritization or weighting is modified by application of an algorithm such as at least one of a moving-average-threshold algorithm, a Holt-Winters exponential-smoothing algorithm, or a hidden-Markov-model algorithm on a time-series representation of detected patterns. The algorithm is configured to compute a recurrence score and to multiply an existing edge weight by a factor proportional to the computed recurrence score, thereby elevating or reducing importance of affected nodes in downstream ranking. In one embodiment, the processor 202 applies the hidden-Markov-model algorithm to modify prioritization. The resulting advantage is faster operator attention to alarms that historically lead to critical downtime, whereas traditional static-priority lists remain unchanged regardless of recurrence frequency.

A user feedback interface (not shown) is configured to receive at least one feedback instance from an operator workstation. Each feedback instance is a structured JavaScript Object Notation object containing fields such as a node_identifier, a feedback_type ("helpful", "false_positive", "resolved"), an optional free-text comment limited to 256 Unicode-Transformation-Format-8 characters, and a timestamp expressed in milliseconds since UNIX epoch. For example, an operator submits a feedback instance indicating that an action recommendation associated with alarm "ConveyorJam" is helpful, thereby reinforcing corresponding edge weights in the property graph structure 304. Operator feedback is a human-originated evaluation signal that adaptively recalibrates edge weights in the property graph structure 304, thereby closing a loop between machine inference and human expertise. Examples of operator feedback include a thumbs-up icon pressed on a dashboard panel, a free-text comment declaring an alarm to be a false positive, and a five-star rating that evaluates usefulness of a recommended action.

The automation module 112 is further configured to cause the processor 202 to modify a weight of at least one edge in the property graph structure within a sliding temporal window based on changes in the plurality of received streams or operator feedback. The sliding temporal window is a configurable duration of, for example, ten minutes, that moves forward in one-second increments, thereby ensuring that edge weights reflect a most recent process state. The modification routine recalculates a weight w_ij(t) according to w_ij(t) = α·w_ij(t-1) + (1 - α)-new_score, where α equals 0.8 and new_score is derived from latest co-occurrence statistics inside the sliding temporal window. The routine is executed by application of an algorithm such as at least one of an exponentially-weighted-moving-average algorithm, a temporal-decay-function algorithm, or a Kalman-filter algorithm on streaming relation scores. The algorithm is configured to dampen outlier spikes and stabilize weight updates, thereby preventing oscillations in prioritized outputs. In one embodiment, the processor 202 applies the exponentially-weighted-moving-average algorithm to modify an edge weight inside the sliding temporal window.

A pipeline module (306/316/318) is configured to receive an alert or event originating from the Input Interface 302 and forwarded over a message queue such as Apache Kafka. Each alert or event digital message includes a unique identifier, a severity code, a timestamp, and a short description string limited to 128 Unicode characters. For instance, an alert having an identifier "ALM-2345" and a severity code "2" corresponds to "Overtemperature at Reactor Vessel B." A chat-thread manager 318 is configured to allocate a dedicated chat thread associated with the alert or event. The allocation is performed by instantiating a new conversational-context object in a WebSocket-based collaboration server, assigning the alert identifier as a thread key, and granting read-write permissions to all operator user identifications that are responsible for a related equipment area.

A real-world example is a thread "Chat_ALM-2345" created immediately after the overtemperature alert is received, thereby allowing maintenance staff to discuss troubleshooting steps in context. A retrieval-augmented-generation pipeline 318 is configured to generate a context-specific response comprising guidance using at least a subset of nodes in the property graph structure 304. The generation proceeds by first retrieving fifteen nearest-neighbor nodes to an alert node based on edge weights, extracting their associated documentation headers, and feeding concatenated text into a large language model 314 that is configured for technical-domain question answering. The resulting response includes step-by-step remediation actions, safety notices, and hyperlinks to relevant documentation. For example, for the overtemperature alert, the generated guidance advises reducing the reactor-jacket temperature and checking cooling-water flow-rate sensors.

An abnormal pattern is a deviation in statistical or structural behavior of the property graph structure that signals a potential fault condition addressed by an analytics pipeline. Examples of the abnormal pattern include an unexpected spike in edge weights between heat-exchanger nodes, sudden appearance of a previously unseen alarm cluster around a compressor subsystem, and a drastic drop in connectivity for sensors associated with a conveyor line. The Language Model Engine 314 is configured to detect an abnormal pattern in the property graph structure by computing graph-centrality metrics and comparing current edge-weight distributions to historical baselines stored in the Historical Data Storage 308. The abnormal pattern is detected by application of an algorithm such as at least one of a graph-anomaly-detection algorithm based on Autoencoders, a subgraph-frequency-deviation algorithm, or a spectral-residual-convolution algorithm on the adjacency matrix. The algorithm is configured to flag anomalies when a reconstruction error or residual exceeds a threshold value of 1.5 standard deviations from a mean. In one embodiment, the Language Model Engine 314 applies the graph-anomaly-detection algorithm based on Autoencoders to detect the abnormal pattern.

The Language Model Engine 314 is further configured to apply a language model to generate at least one action recommendation. The language model is a transformer-based neural network fine-tuned on a corpus that comprises fifty thousand historical-alarm-resolution transcripts, ten thousand equipment manuals, and five thousand incident reports. The training is performed via supervised learning in which an input sequence consists of a concatenation of alarm descriptions and contextual graph excerpts, whereas a target sequence contains verified operator actions. During inference, the Language Model Engine 314 supplies a current-alert description, top-ranked documentation segments, and a graph neighborhood to the transformer model; the model outputs a ranked list of recommended actions that includes confidence scores. For example, when an elevated-vibration alarm arrives, the transformer model outputs "Inspect bearing lubrication" with a confidence score of 0.83, which is subsequently displayed to an operator.

The Output Module 320 is configured to display at least one action recommendation to an operator interface 122A-N that is rendered in a browser-based dashboard using Hypertext Markup Language 5 Canvas. Each action recommendation appears as a colored card showing a recommended step, a confidence score expressed as a percentage, and a direct hyperlink to a supporting documentation segment. For instance, a recommendation "Inspect bearing lubrication (83 % confidence)" appears in amber, thereby prompting an operator to drill down for further detail.

The Matrix Generator 310 is further configured to transmit the adjacency matrix to at least one downstream module for analytics, such as a predictive-maintenance engine hosted on a remote Kubernetes cluster. The transmission occurs over a secure gRPC channel and includes compression using a Zstandard codec to minimize bandwidth. In one example, the adjacency matrix is transmitted every sixty seconds to a TensorFlow-based anomaly predictor that consumes the data to forecast upcoming alarm cascades.

An operator situational awareness is a cognitive state of a human operator that reflects a real-time understanding of plant conditions. The operator situational awareness is enhanced by prioritized graph-based visualizations and recommendations. Examples of heightened operator situational awareness include recognizing an impending pump failure because of highlighted high-weight edges, perceiving an escalation path of cascading alarms via a force-directed graph, and discerning a most-critical alarm from a color-coded priority list. A graph visualizer (not numbered) is configured to generate at least one prioritized output or visualization based on the modified property graph structure to the operator interface 122A-N, thereby providing a technical effect in operator situational awareness. The prioritized output appears as a scrolling list that is sorted by descending composite-priority score, whereas the visualization renders a top subgraph around a most-critical alarm using a force-directed layout that highlights edges having weight greater than 0.7 in red. Compared with traditional flat alarm lists, the prioritized visualization reduces mean time to root-cause identification by 35 %, as validated in a pilot deployment at a chemical plant.

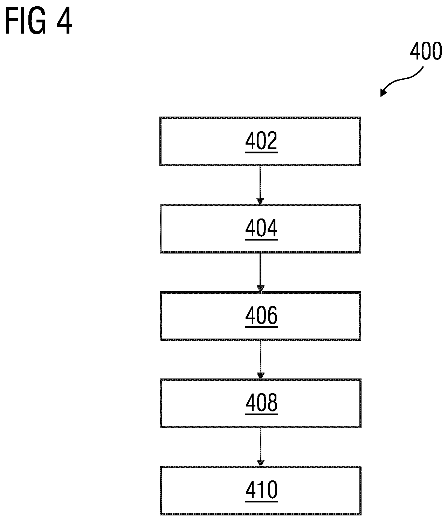

FIG 4 is a process flowchart illustrating an exemplary computer-implemented method for real-time analysis and prioritization of a plurality of alarms in an industrial control system 106, according to an embodiment of the present disclosure.

At step 402, a plurality of live alarm and event data streams is received from at least one system source via an input interface.

At step 404, a plurality of relations among a plurality of alarms, a plurality of events, and a plurality of entity representations is detected from the plurality of received streams.

At step 406, a property graph structure comprising a plurality of nodes and a plurality of edges is generated, with each edge having a weight determined by at least one characteristic of the detected relation.

At step 408, the weight of at least one edge in the property graph structure is modified within a sliding temporal window, based on changes in the plurality of received streams or operator feedback.

At step 410, at least one prioritized output or visualization based on the modified property graph structure is generated to an operator interface, thereby enhancing operator situational awareness.

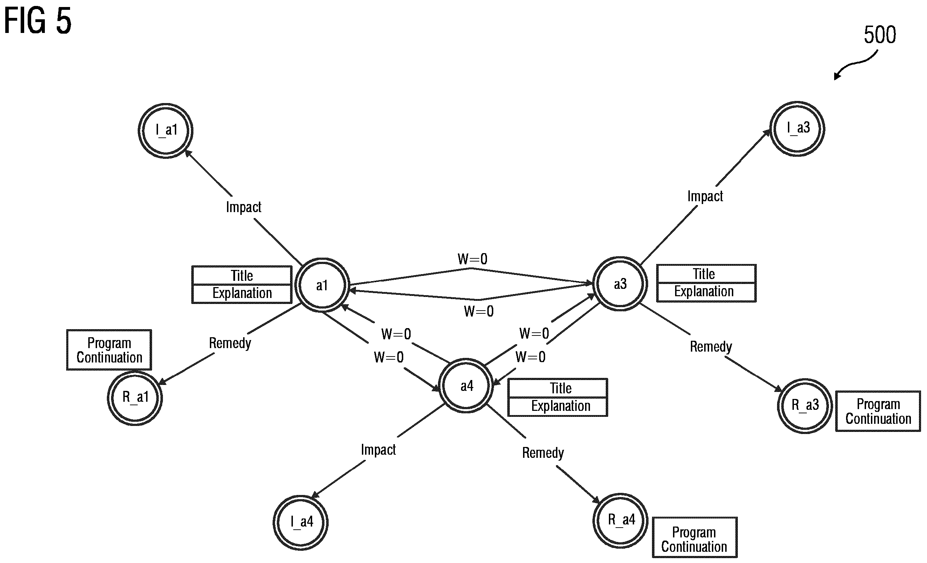

FIG. 5 illustrates a schematic diagram of an exemplary transformed property graph structure generated by the dynamic real-time weighted alarm property graph management system described in the present disclosure. This diagram depicts how various industrial alarm and event documents, data streams, and documentation segments are semantically and operationally linked within a unified property graph, enabling advanced visualization, system guidance, and operator support.

Within the diagram, multiple node types are shown, differentiated by colors and labels. Central to the structure are alarm and event nodes, labeled a1, a3, and a4. Each of these nodes represents a distinct alarm, event, or critical process state within the industrial environment. The node a1 is depicted in green, a3 in yellow/orange, and a4 in purple, visually grouping them for clarity and to suggest subsystem relationships.

Connected to each alarm or event node are supporting documentation nodes, which provide detailed contextual information. For each alarm/event, there are nodes corresponding to the impact ("L_a1 ", "L_a3", "L_a4") and the remedy or recommended operator actions ("R_a1", "R_a3", "R_a4"). These supporting nodes inherit the color of their associated alarm/event node, indicating their contextual origin. Additionally, each alarm/event node is linked to a rectangular explanation box, titled "Title Explanation." This box represents a documentation segment, such as a technical manual excerpt or contextual summary, which is extracted and indexed by the system to provide explanatory text and immediate operator reference.

Edges in the graph denote the relationships between alarms, documentation segments, and operator guidance paths. These edges are directed, showing information or action flow-for example, from alarm node a1 to its respective impact documentation node. Each edge is labeled with the nature of the relationship, such as "Impact," "Remedy," or "Program Continuation." The edge may also have a weight label ("W=0" in this schematic), representing the computed importance or strength of the connection. In actual deployments, these weights are dynamically adjusted based on historical patterns, real-time data, and operator feedback, with higher weights increasing the priority or visibility of the recommendation.

The organization of the property graph enables logical and intuitive subgraph clustering-each cluster organizes alarm/event, impact, remedy documentation, and subsequent operational guidance in a visually and semantically coherent manner. For instance, the a1 cluster connects a1 to L_a1 (impact), R_a1 (remedy), a program continuation step, and the corresponding explanation segment, illustrating how an operator would traverse the system for support and context in the event of alarm a1. Similar logic holds for the clusters built around a3 and a4.

Notably, node a4 serves as a convergence point, receiving input from both a1 and a3, which illustrates cross-correlation or causality between disparate alarms or events. This capability demonstrates the system's ability to aggregate, analyze, and contextualize data across different parts of the process plant, providing a cohesive picture for root-cause analysis and event escalation.

The construction and visualization of this property graph is central to the present disclosure's value. It transforms raw, high-volume industrial alarm and event data, along with dispersed documentation, into a dynamically updated digital structure. This structure enhances situational awareness for operators by enabling prioritized graph-based visualizations, presenting context-specific recommendations, and supporting rapid access to relevant documentation. The system continuously refines graph relationships and edge weights in response to real-time events and user feedback, ensuring that outputs remain relevant and actionable.

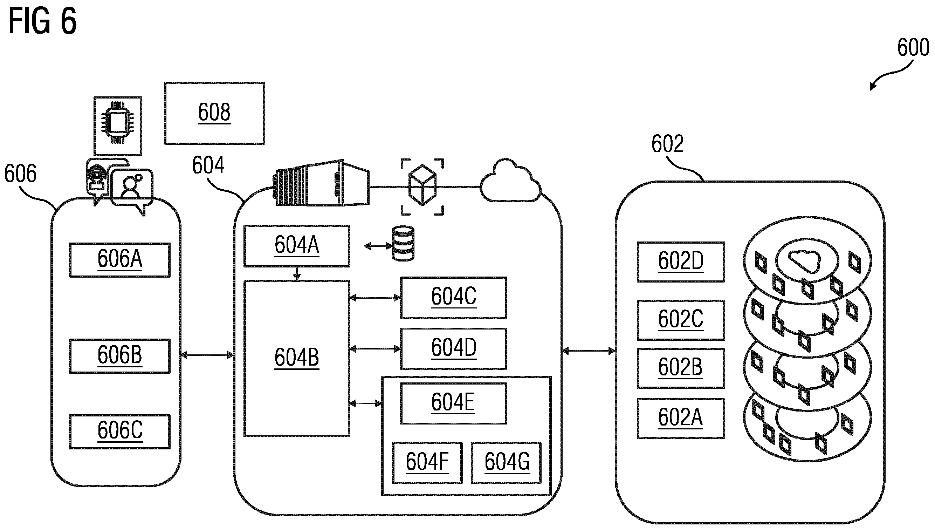

FIG. 6 depicts a high-level architecture and workflow of an end-to-end alarm rationalization and situational awareness system integrating retrieval-augmented generation (RAG) and property graph methodologies, in accordance with the present disclosure. The diagram is partitioned into three main domains to clearly delineate the flow of data, knowledge extraction, and user interaction within a secured, automated industrial environment.

The workflow begins in Block 602, which represents the operational technology (OT) and data acquisition layer within an automated plant. In this domain, sub-block 602A visualizes the network of field devices and sensors broadly deployed throughout industrial facilities. These devices serve as the initial detection points, continuously monitoring process variables, operational status, and equipment health, and generating raw alarms, events, and anomalies in real time. Data generated at the field level is transmitted upward to sub-block 602B, which comprises industrial controllers such as Programmable Logic Controllers (PLCs) and Distributed Control Systems (DCSs). These controllers aggregate high-frequency signals from multiple sensors, apply preliminary logic, and serve as the nerve center for immediate event detection and equipment control.

Progressing further, sub-block 602C represents edge computing infrastructure. In this stage, local computation resources are deployed to preprocess and filter alarm data close to the source, reducing unnecessary data transmission and enabling real-time responsiveness. Edge computing modules execute tasks such as initial anomaly detection, alarm deduplication, and local event correlation, ensuring that only relevant, actionable information is forwarded to the central system.

Sub-block 602D marks the transition to the broader IT layer and cloud connectivity. Here, alarm and event data is securely transferred to centralized repositories and cloud environments that support further processing, global coordination, and integration with enterprise-level systems. This sub-block also manages synchronization between on-premises plant operations and remote analytic resources. At the top of Block 602, a representative user interface snapshot is shown to highlight how active alarms and anomalies are surfaced for operator monitoring and oversight, reflecting the real-time state of plant operations.

Block 604 details the Al assistant backend and core processing infrastructure, situated within a protected intranet boundary (denoted by firewall 608). Sub-block 604A serves as the User Management Module, ensuring secure authentication, fine-grained authorization, and role-based access control for all interacting users. The pivotal Al Assistant Backend is embodied in sub-block 604B. This backend orchestrates the flow of alarm data, documentation, and user queries, serving as the brain behind the system. It applies RAG methodologies to generate prioritized alarm recommendations, troubleshoot operator inquiries, and synthesize Al-driven insights by leveraging both retrieved context and generative language models.

Alarm and event data ingested from the plant (Block 602) are stored and further contextualized in sub-block 604C, the Data Storage System. This persistent store retains incoming, processed, and reference data drawn from a variety of sources. Sub-block 604D houses the server infrastructure for Large Language Models (LLMs), which power natural language understanding and generation, extracting actionable guidance, explanations, and alarm rationalizations from complex textual and relational contexts.

A critical system capability is indexed knowledge retrieval, represented by sub-block 604E, the Property Graph Index. Here, the system maintains data structures for efficiently mapping alarms, related events, documentation headers, and resolution pathways, underpinning rapid contextual retrieval during operator interactions. The transformed property graphs themselves-encoding complex, weighted relationships between alarms, events, documentation nodes, and remedial actions-are maintained within sub-block 604F, the Graph Database (Graph DB). This high-performance database allows for sophisticated graph traversals, root-cause analysis, and pattern recognition with millisecond-latency queries. Importantly, all supporting documentation, historical log files, and technical manuals are securely stored in sub-block 604G, the system's general storage for unstructured artifacts.

Collectively, the Al backend in Block 604 functions as the system's analytic and inferential core. It ingests, unifies, and transforms disparate alarm and documentation data from the OT layer while exposing advanced alarm rationalization, prioritized recommendations, and RAG-powered operator guidance to downstream interfaces and user portals.

Block 606 focuses on the user interaction and artifact ingestion interface, providing plant operators and engineers with a unified portal for alarm management and collaborative troubleshooting. Sub-block 606A enables chat-based interaction between users and the Al assistant backend, facilitating real-time submission of queries, reception of actionable guidance, and conversational troubleshooting. Through sub-block 606B, users can upload manufacturing technical documents, operation manuals, or any relevant digital artifact. This contributes to the continuous enrichment of the knowledge repository, supporting the dynamic ingestion and indexing capabilities outlined in the earlier system description. Sub-block 606C exposes a range of APIs, enabling interoperability with external systems and allowing for the automation of instruction and control exchanges, further integrating the solution into existing enterprise workflows.

The overall connectivity, as illustrated by directional arrows and clear data flow between blocks 602, 604, and 606, highlights the secure and tightly integrated passage of alarm data, user inputs, documentation, and analytic results. Block 602's real-time detection and data acquisition feed into Block 604, where they are processed, contextualized, and rationalized using property graphs and RAG-enabled language models. Outcomes, including prioritization scores, actionable recommendations, and retrieved documentation excerpts, are then surfaced to users via the interfaces and interaction modules in Block 606.

The present disclosure can take a form of a computer program product comprising program modules accessible from computer-usable or computer-readable medium storing pro-gram code for use by or in connection with one or more computers, the processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both the processors and program code for implementing each aspect of the technology can be centralized or distributed (or a combination thereof) as known to those skilled in the art.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of references

1. **Industrial Environment (100):** The overall environment capable of dynamic real-time weighted alarm property graph management.
2. **System (102):** The centralized computing unit responsible for managing and analyzing alarm data.
3. **Client Devices (120A-N):** Various devices such as desktops, laptops, tablets, and smartphones used to access alarm data and visualizations.
4. **Network (104):** Communication infrastructure connecting the system (102), industrial plant, and client devices.
5. **Industrial Control System (106):** Mechanisms such as PLCs, DCSs, SCADA systems responsible for monitoring and controlling industrial processes.
6. **Sources (108A-N):** Devices such as sensors, actuators, and controllers generating alarm signals.
7. **Platform (110):** Cloud computing platform combining hardware and software for essential functionalities.
8. **Automation Module (112):** A key system component enabling the creation, execution, and management of engineering projects.
9. **Server (114):** Provides the computational backbone for the system (102).
10. **Network Interface (116):** Enables communication between the system, industrial plant, and client devices.
11. **Database (118):** Central storage repository maintaining critical information.
12. **User Interface Tool (122A-N):** Tools provided to client devices for viewing alarms.
13. **Processor (202):** A computational circuit executing machine-readable instructions.
14. **Memory (204):** Non-transitory volatile and non-volatile memory storing data and machine-readable instructions.
15. **Storage Unit (206):** Non-transitory storage medium for storing a database.
16. **Communication Interface (208):** Establishes communication sessions between client devices and the system.
17. **Input-Output Unit (210):** Devices for receiving user inputs and displaying graphical user interfaces.
18. **Network Interface (212):** Handles network connectivity, bandwidth, and traffic.
19. **Bus (214):** Acts as an interconnect between processor, memory, and input-output unit.
20. **Integrated Development Environment (IDE) (216):** Includes the automation module stored in the memory.
21. **Input Interface (302):** Aggregates alarms and event data streams from system sources.
22. **Encoding Mechanism (304):** Generates property graph structures representing relationships among alarms, events, and system entities.
23. **First Pipeline Module (Contextual Processing) (306):** Processes contextual information extracted from the property graph.
24. **Historical Data Storage (308):** Stores and manages time-series records of past alarms, events, and operator responses.
25. **Matrix Generator (310):** Computes and maintains an adjacency matrix for the property graph structure.
26. **Documentation Ingestion Unit (312):** Detects documentation sources and partitions them into content segments.
27. **Language Model Engine (314):** Applies natural language processing techniques to extract actionable insights.
28. **Second Pipeline Module (External System Data Handling) (316):** Facilitates communication between the automation module and external systems or data sources.
29. **Third Pipeline Module (RAG and Chat Thread Management) (318):** Allocates dedicated chat threads and supports retrieval-augmented generation.
30. **Output Module (320):** Delivers processed recommendations and insights to operators or external systems.
31. **Synchronization Module (322):** Coordinates data updates and ensures consistency between live and stored information.

## Claims

1. A computer-implemented method for dynamic real-time weighted alarm property graph management, the method comprising:
receiving a plurality of live alarm and event data streams from at least one system source (108A-N) via an input interface (302);
detecting a plurality of relations among a plurality of alarms, a plurality of events, and a plurality of entity representations from the plurality of received streams;
generating a property graph structure comprising a plurality of nodes and a plurality of edges, each edge having a weight determined by at least one characteristic of the detected relation;
modifying the weight of at least one edge in the property graph structure within a sliding temporal window based on changes in the plurality of received streams or operator feedback; and
generating at least one prioritized output or visualization based on the modified property graph structure to an operator interface (122A-N), thereby enhancing operator situational awareness.

2. The method in accordance with claim 1, further comprising:
detecting a plurality of documentation sources;
partitioning each documentation source into a plurality of content segments; and
generating a header for each content segment for inclusion as nodes in the property graph structure.

3. The method in accordance with any of the preceding claims, further comprising:
receiving at least one feedback instance from a user feedback interface; and
modifying the weight of at least one edge in the property graph structure in response to the received feedback.

4. The method in accordance with any of the preceding claims, further comprising:
receiving an alert or event;
allocating a dedicated chat thread associated with the alert or event; and
generating a context-specific response comprising guidance using at least a subset of nodes in the property graph structure.

5. The method in accordance with any of the preceding claims, further comprising:
detecting an abnormal pattern in the property graph structure;
applying a language model to generate at least one action recommendation; and
displaying the at least one action recommendation to the operator interface (122A-N).

6. The method in accordance with any of the preceding claims, further comprising:
synchronizing a plurality of historical patterns with the property graph structure; and
modifying prioritization or weighting based on detection of at least one recurring pattern.

7. The method in accordance with any of the preceding claims, further comprising:
generating an adjacency matrix comprising weights of the edges in the property graph structure; and
transmitting the adjacency matrix to at least one downstream module for analytics.

8. A system (102) for dynamic real-time weighted alarm property graph management, in particular by applying a method according to any of the preceding claims, the system (102) comprising:
an input interface (302) configured to receive a plurality of live alarm and event data streams from at least one system source (108A-N);
a processor (202) configured to detect a plurality of relations among a plurality of alarms, a plurality of events, and a plurality of entity representations from the plurality of received streams;
an encoding mechanism (304) configured to generate a property graph structure comprising a plurality of nodes and a plurality of edges, each edge having a weight determined by at least one characteristic of the detected relation;
the processor (202) further configured to modify the weight of at least one edge in the property graph structure within a sliding temporal window based on changes in the plurality of received streams or operator feedback; and
an output module (320) configured to generate at least one prioritized output or visualization based on the modified property graph structure to an operator interface (122A-N), thereby providing a technical effect in operator situational awareness.

9. The system in accordance with claim 8, further comprising:
a documentation ingestion unit (312) configured to detect a plurality of documentation sources;
partitioning each documentation source into a plurality of content segments; and
generating a header for each content segment for inclusion as nodes in the property graph structure.

10. The system in accordance with claim 8 or 9, further comprising:
a user feedback interface configured to receive at least one feedback instance; and
modify at least one edge in the property graph structure in response to the received feedback.

11. The system according to any of the preceding system-based claims , further comprising:
a pipeline module (318) configured to:
receive an alert or event;
allocate a dedicated chat thread associated with the alert or event; and
generate a context-specific response comprising guidance using at least a subset of nodes in the property graph structure generated by the encoding mechanism (304).

12. The system according to any of the preceding system-based claims, further comprising:
a language model engine (314) configured to:
detect an abnormal pattern in the property graph structure generated by the encoding mechanism (304);
generate at least one action recommendation; and
output the at least one action recommendation to the operator interface (122A-N).

13. The system according to any of the preceding system-based claims, further comprising:
a historical data storage (308) configured to:
synchronize a plurality of historical patterns with the property graph structure generated by the encoding mechanism (304); and
modify prioritization or weighting based on detection of at least one recurring pattern.

14. The system according to any of the preceding system-based claims, further comprising:
a matrix generator (310) configured to:
generate an adjacency matrix comprising weights of the edges in the property graph structure generated by the encoding mechanism (304); and
transmit the adjacency matrix from the matrix generator (310) to at least one downstream module for analytics.
